# EUROPÄISCHE PATENTSCHRIFT

(11) **EP 3 734 495 B1**
(45) Veröffentlichungstag und Bekanntmachung des Hinweises auf die Patenterteilung: **15.06.2022**
(21) Anmeldenummer: 20172327.7
(22) Anmeldetag: 30.04.2020
(51) Int. Cl.: G06K 7/10, H04B 1/38, H04B 1/22

(54) **UHF-LESEGERÄT**
UHF READING DEVICE
LECTEUR UHF

(30) Priorität: 03.05.2019 DE 102019111500
(43) Veröffentlichungstag der Anmeldung: 04.11.2020
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Werner, Andreas, 30167 Hannover (DE); Ostermeier, Christian, 32469 Petershagen (DE)
(74) Vertreter: Patentanwälte Thömen & Körner

(56) Entgegenhaltungen:
- EP-A1- 2 645 299
- US-A1- 2009 267 738

## Beschreibung

Die Erfindung betrifft ein UHF-Lesegerät nach dem Oberbegriff des Anspruchs 1.

Es gibt eine breite Palette von UHF-Lesegeräten für unterschiedliche Anwendungen. Allen gemeinsam ist der deutlich höhere Preis gegenüber Lesegeräten für HF- oder LF-RFID. Aufgrund des höheren Preises konnte sich UHF-RFID in bestimmten Bereichen, wie zum Beispiel der Zutrittskontrolle, noch nicht durchsetzen, obwohl die UHF-Transponder günstiger herzustellen sind als HF- oder LF-Spulen-Transponder. Dieser hohe Preis ist damit verbunden, dass die meisten Hersteller von RFID-Lesegeräten hochintegrierte Readerchips einsetzen, die sowohl die komplizierten UHF-RFID-Protokolle beherrschen, als auch über geeignete Modulations- und Sende-Hardware verfügen.

Aus der EP 2 645 299 A1 ist ein UHF-Lesegerät, bestehend aus einem Sender, einem Empfänger und einem digitalen De- und Encoder bekannt, wobei der Sender einen vom digitalen De- und Encoder gesteuerter und optional modulierbarer UHF-Generator ist, und der Empfänger wenigstens einen Hüllkurvendetektor umfasst, wobei dem Eingang des Hüllkurvendetektors additiv überlagert ein unmodulierter Träger des UHF-Generators und ein über eine Antenne empfangenes moduliertes Transpondersignal zugeführt ist.

Aus der US 2009/267738 1 ist ebenfalls ein UHF-Lesegerät bekannt, dessen Demodulationsstrukturdesign jedoch auf einem XOR-Gatter basiert, das den Produktdetektor der herkömmlichen Costas-Schleife ersetzt, und einen Rückkopplungsmodulator verwendet, um die Funktion des ursprünglichen Phasendetektors zu ersetzen, um die Schaltungskomplexität zu verringern.

Der Erfindung liegt die Aufgabe zugrunde, ein UHF-Lesegerät für eingeschränkte Reichweite mit einfacheren Mitteln zu schaffen.

Diese Aufgabe wird bei einem UHF-Lesegerät nach dem Oberbegriff des Anspruchs 1 durch die Merkmale dieses Anspruchs und bei einem UHF-Lesegerät nach dem Oberbegriff des Anspruchs 6 durch die Merkmale jenes Anspruchs gelöst.

Weiterbildungen und vorteilhafte Ausgestaltungen ergeben sich aus den Unteransprüchen.

Bei der erfindungsgemäßen Lösung werden ein marktüblicher Transceiverchip als UHF-Generator mit einem Mikrocomputer als digitaler De- und Encoder sowie ein digitaler Hardware-Decoder eingesetzt, wobei statt der üblichen analog/digital- - Umsetzung Hüllkurvendetektoren, Phasenschieber und Komparatoren benutzt werden. Dabei werden ein unmodulierter Träger des UHF-Generators und ein über eine Antenne empfangenes moduliertes Transpondersignal additiv überlagert. Beim resultierenden Signal wird durch eine Zeitmessung der Abstände der Phasensprünge der digitalen Übertragung dekodiert. Diese Maßnahmen können die Nachteile der teuren UHF-Lesegeräte, wie hohe Rechenleistung und große Leistungsaufnahme sowie hochwertige, sehr schnelle A/D- Umsetzer umgehen. Bei der Lösung nach Anspruch 1 sind zwischen dem Ausgang eines Hüllkurvendetektors und Eingängen eines Komparators Filter angeordnet, wobei ein Tiefpass- und Gleichanteilfilter mit einem Referenzeingang des Komparators und ein weiteres Tiefpassfilter mit einem Signaleingang des Komparators verbunden sind. Das mit dem Signaleingang verbundene Tiefpassfilter weist eine höhere Grenzfrequenz auf als das mit dem Referenzeingang des Komparators verbundene Tiefpass- und Gleichanteilfilter.

Dadurch wird das Referenzsignal aus dem Nutzsignal gewonnen und gleitend nachgeführt.

Gemäß einer Weiterbildung kann zwischen dem Hüllkurvendetektor und der Antenne ein Phasenschieber angeordnet sein.

Dadurch wird der Empfangsbereich, in dem eine konstruktive Überlagerung stattfindet, festgelegt. Unter einer konstruktiven Überlagerung wird verstanden, dass die Überlagerung eines binären Signals mit einem Träger für jeden von beiden Zuständen des binären Signals einen unterschiedlichen Betrag des Summensignals aus dem binären Signal und dem Träger liefert.

Zwischen dem Ausgang des digitalen De- und Encoders und dem Modulationseingang des Senders kann ein weiteres Tiefpassfilter angeordnet sein.

Für den Fall, dass der Sender mit einem analogen Signal moduliert werden soll, das vom Ausgangssignal des De- und Encoder mittels Digital/Analog-Wandlung erzeugt wird, werden Oberwellen mittels des Tiefpassfilters gedämpft.

Gemäß einer Weiterbildung ist vorgesehen, dass der Empfänger einen zweiten Empfangskanal umfasst, der identisch zum ersten Empfangskanal aufgebaut ist, wobei der Eingang des einen Empfangskanals vor dem Phasenschieber und der Eingang des anderen Empfangskanals hinter dem Phasenschieber angeschlossen sind und dem digitalen De- und Encoder komplexe Ausgangssignale I und Q der Komparatoren von den beiden Empfangskanälen zugeführt sind.

Während es bei einem Empfangskanal unter ungünstigen Verhältnissen durch Phasenverschiebungen bei der Überlagerung zu Auslöschungen kommen kann, werden mit zwei Empfangskanälen phasenverschobene Ausgangssignale erzeugt, von denen stets ein Ausgangssignal bei einer möglichen Auslöschung des anderen Ausgangssignals erhalten bleibt und weiter auswertbar ist.

Zwischen der Antenne und dem Eingang des Empfängers bzw. dem Ausgang des Senders kann ein Bandpassfilter angeordnet sein.

Dieses Bandpassfilter blendet einerseits Störungen außerhalb des Empfangsfrequenzbandes aus und unterdrückt Oberwellen des Senders, sofern dieser als digitaler Verstärker ausgeführt ist und digitale Ausgangssignale des De- und Encoders direkt verstärkt.

Bei der Lösung nach Anspruch 6 sind sowohl dem Signaleingang als auch dem Referenzeingang des Komparators oder jedes Komparators Hüllkurvendetektoren zugeordnet. Weiter sind in Serie zu dem einen Phasenschieber weitere Phasenschieber angeordnet. Die Eingänge der Hüllkurvendetektoren sind an Ein- oder Ausgängen der Phasenschieber derart angeordnet, dass zwischen den Eingängen der Hüllkurvendetektoren, die dem selben Komparator zugeordnet sind, jeweils eine Phasendifferenz verursacht durch zwei Phasenschieber auftritt und zwischen den Eingängen unterschiedlicher Komparatoren von jeweils einer Phasendifferenz verursacht durch einen Phasenschieber auftritt. Zwischen den Ausgängen der Hüllkurvendetektoren und den Eingängen des Komparators oder jedes Komparators ist wenigstens ein Tiefpassfilter oder Bandpassfilter angeordnet.

Bei dieser Ausführung werden die Referenzsignale und Nutzsignale für die Komparatoren nicht von jeweils einem Hüllkurvendetektor erzeugt und durch Tiefpassfilter unterschiedlicher Grenzfrequenz voneinander getrennt, sondern für Nutzsignale und Referenzsignale stehen jeweils eigene Hüllkurvendetektoren zur Verfügung, denen die Eingangssignale jedoch phasenverschoben zugeführt sind. Hierdurch wird eine verbesserte Erzeugung der Nutzsignale und Referenzsignale erreicht und die Stabilität gegen Auslöschungen weiter verbessert. Gegenüber den vorgenannten Ausführungen ergibt sich eine höhere Lesereichweite.

Nachfolgend wird die Erfindung anhand eines Ausführungsbeispiels erläutert, das in der Zeichnung dargestellt ist. Darin zeigen:
- Fig. 1: ein Blockschaltbild mit einem Empfangskanal nach der Erfindung,
- Fig. 2: ein Blockschaltbild mit zwei Empfangskanälen nach der Erfindung und
- Fig. 3: ein Blockschaltbild mit zwei Empfangskanälen und getrennten Hüllkurvendetektoren für die Nutzsignale und Referenzsignale nach der Erfindung.
- Fig. 4: ein Zeigerdiagramm einer konstruktiven Überlagerung von zurückgesandten Transpondersignalen und einem Träger und
- Fig. 5: ein Zeigerdiagramm einer destruktiven Überlagerung von zurückgesandten Transpondersignalen und einem Träger

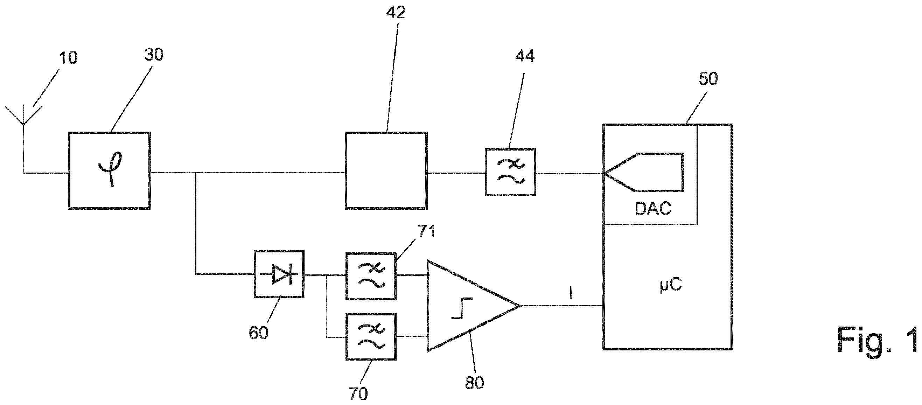

Fig. 1 zeigt ein Blockschaltbild mit einem Empfangskanal nach der Erfindung. Ein Mikrocontroller 50 ist als Encoder Bestandteil eines Senders, der zur Erzeugung eines Lesefelds, gegebenenfalls zum Senden von Daten und zur Erzeugung eines Trägers zur Überlagerung eines Empfangssignals dient. Ferner ist der Mikrocontroller 50 als Decoder Bestandteil eines Empfängers, der die demodulierten digitalen Nutzsignale auswertet. Ein weiterer Bestandteil des Senders ist ein Oszillator 42, der ein für andere Anwendungszwecke bestimmter UHF-Transceiver sein kann, jedoch als kostengünstiges Serienbauelement erhältlich ist und von dem lediglich der Sendeteil benutzt wird. Alternativ kann der Oszillator 42 auch einen Synthesizer mit VCO oder auch ein SAW-Oszillator sein, der über Modulationsmöglichkeiten, wie einen Modulationseingang, eine Arbeitspunkteinstellung zur Modulation verfügt oder sich über die Steuerspannung eines Transistor modulieren lässt. Im Blockschaltbild nach Fig. 1 wird der Oszillator 42 analog angesteuert, wobei zur Wandlung des digitalen Ausgangssignals des Mikrocontrollers 50 ein Digital/Analog-Wandler im Mikrocontroller 50 integriert ist. Zur Dämpfung von Oberwellen des Digital/Analog-Wandlers ist diesem außerdem noch ein optionales Tiefpassfilter 44 nachgeschaltet. Vom Ausgang des Oszillators 42 gelangt das Sendesignal über einen optionalen Phasenschieber 30 an eine Antenne 10 und erzeugt ein Lesefeld für passive RFID-Transponder.

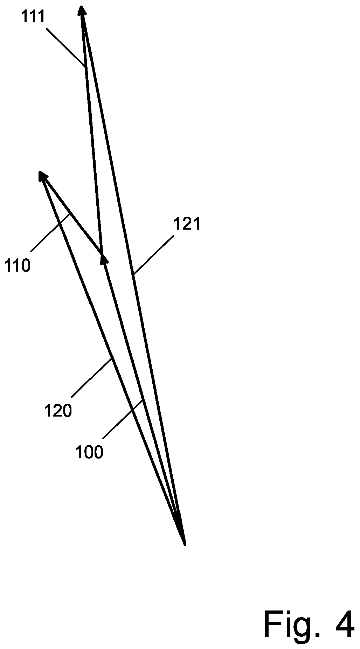

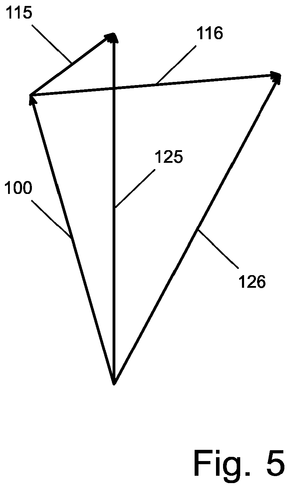

Von einem RFID-Transponder wird ein Signal zurückgesendet, das im Idealfall zwischen zwei festen Zuständen um eine logische 1 oder einen logischen 0 wechselt. Der Phasenwinkel und Amplitudenunterschied zwischen den beiden Zuständen bleibt immer gleich und wird hier mit 180° und identischer Amplitude angenommen. Das zurückgesendet Signal wird über dieselbe Antenne 10 empfangen und gelangt über den optionalen Phasenschieber 30 zum Eingang eines Hüllkurvendetektors 60. Gleichzeitig gelangt auch der Träger des Oszillators 42 zum Eingang des Hüllkurvendetektors 60 und wird mit dem Empfangssignal vom RFID-Transponder additiv gemischt. Das demodulierte Empfangssignal gelangt über zwei Tiefpassfilter 70 und 71 zu Eingängen eines Komparators 80. Das Tiefpassfilter 70 hat eine niedrigere Grenzfrequenz als das Tiefpassfilter 71 und liefert ein Referenzsignal, während das Tiefpassfilter 71 ein Nutzsignal liefert. Der Komparator 80 gewinnt aus dem analogen Nutzsignal durch Vergleich mit dem Referenzsignal ein digitales Signal, das dem Mikrocontroller 50 zugeführt und von diesem ausgewertet wird. Der optionale Phasenschieber 30 sorgt dafür, den Empfangsbereich, in dem eine konstruktive Überlagerung erfolgt, festzulegen. Unter einer konstruktiven Überlagerung wird verstanden, dass die Überlagerung eines binären Signals mit einem Träger für jeden von beiden Zuständen des binären Signals einen unterschiedlichen Betrag des Summensignals aus dem binären Signal und dem Träger liefert. Eine weitere Erläuterung folgt noch im Zusammenhang mit den Figuren 4 und 5.

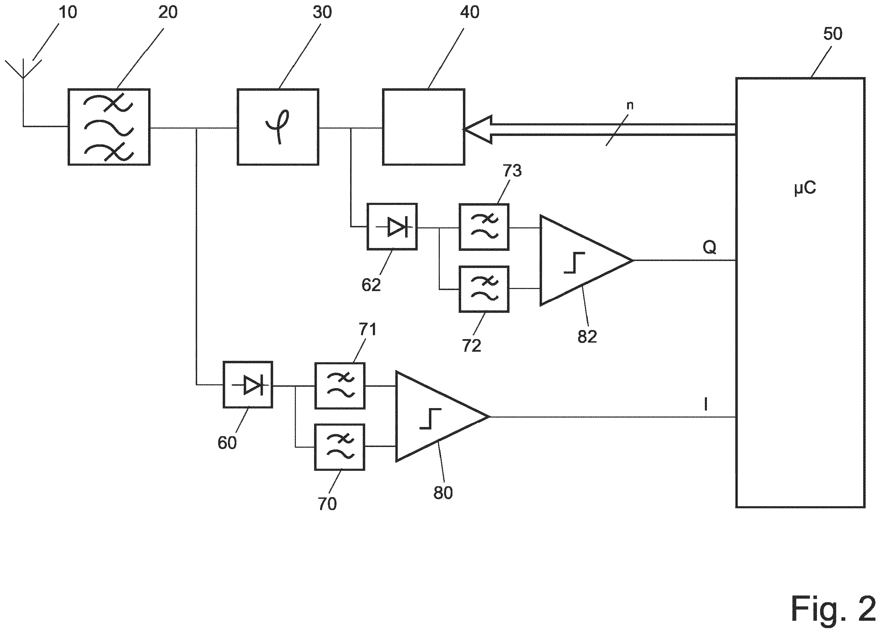

Fig. 2 zeigt ein Blockschaltbild mit zwei Empfangskanälen nach der Erfindung. Ein Mikrocontroller 50 steuert einen Oszillator 40 in Form eines UHF-Transceivers digital über n-Leitungen. Der Oszillator 40 liefert einen unmodulierten oder modulierten UHF-Träger, der über einen Phasenschieber 30 und ein optionales Bandpassfilter 20 an eine Antenne 10 gelangt und ein Lesefeld für passive RFID-Transponder erzeugt.

Das von einem RFID-Transponder rückgesendete Signal wird über dieselbe Antenne 10 empfangen und gelangt über das optionale Bandpassfilter 20 in vergleichbarer Weise mit der Ausführung nach Fig. 1 zum Eingang eines Hüllkurvendetektors 60. Gleichzeitig gelangt auch der Träger des Oszillators 40 über einen Phasenschieber 30 zum Eingang des Hüllkurvendetektors 60 und wird mit dem Empfangssignal vom RFID-Transponder additiv gemischt. Das demodulierte Empfangssignal gelangt über zwei Tiefpassfilter 70 und 71 zu Eingängen eines Komparators 80. Das Tiefpassfilter 70 hat eine niedrigere Grenzfrequenz als das Tiefpassfilter 71 und liefert ein Referenzsignal, während das Tiefpassfilter 71 ein Nutzsignal liefert. Der Komparator 80 gewinnt aus dem analogen Nutzsignal durch Vergleich mit dem Referenzsignal ein digitales Signal, das dem Mikrocontroller 50 über einen I-Eingang zugeführt und von diesem ausgewertet wird.

Zusätzlich zu dem bereits in Fig. 1 vorhandenen Kanal ist noch ein weiterer identisch aufgebauter Kanal vorhanden, dem das von dem RFID-Transponder rückgesendete Signal nach Durchlaufen des Phasenschiebers 30 zugeführt ist. Mittels des Phasenschiebers 30 wird das vom RFID-Transponder zurückgesendet Signal um 45° gedreht. Der vom Oszillator 40 stammende Träger, der den Phasenschieber 30 in umgekehrter Richtung durchläuft, erfährt eine entgegengesetzte Phasenrotation. Zusammen mit dem phasenverschobenen Empfangssignal gelangt auch der Träger des Oszillators 40 zum Eingang dieses zweiten Kanals mit einem Hüllkurvendetektor 62 und wird mit dem Empfangssignal vom RFID-Transponder additiv gemischt. Nach der Demodulation mithilfe der Hüllkurvendetektoren ist die Phaseninformation verloren. Nur die Amplituden der Signale stehen zur Verfügung. Analog zum ersten Kanal gelangt das demodulierte Empfangssignal über zwei Tiefpassfilter 72 und 73 zu Eingängen eines Komparators 82. Das Tiefpassfilter 72 hat eine niedrigere Grenzfrequenz als das Tiefpassfilter 73 und liefert ein Referenzsignal, während das Tiefpassfilter 73 ein Nutzsignal liefert. Der Komparator 82 gewinnt aus dem analogen Nutzsignal durch Vergleich mit dem Referenzsignal ein digitales Signal, das dem Mikrocontroller 50 über einen Q-Eingang zugeführt und von diesem ausgewertet wird.

Auslöschungen, die durch unterschiedliche Phasen in der Überlagerung entstehen, treten nie gleichzeitig an beiden Eingängen auf, so dass mittels des Mikrocontrollers 50 stets zumindest eines der beiden Signale an den Eingängen ausgewertet werden kann.

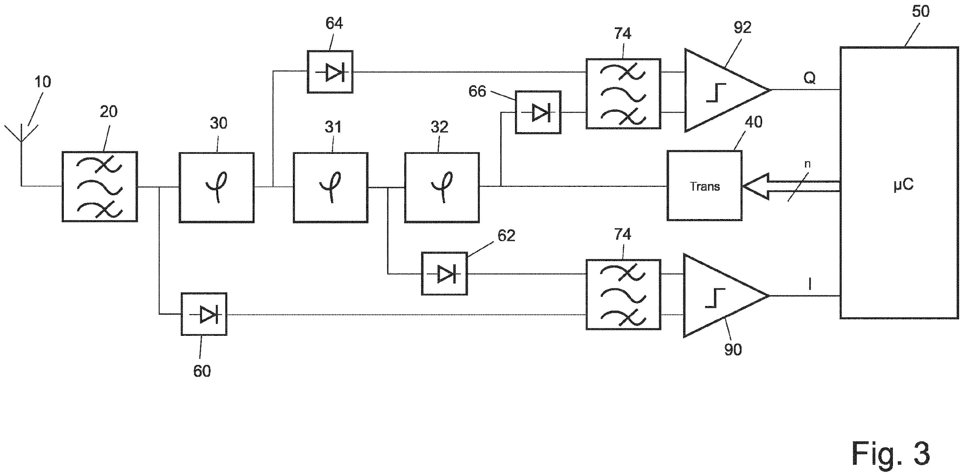

Fig. 3 zeigt ein Blockschaltbild mit zwei Empfangskanälen und getrennten Hüllkurvendetektoren für die Nutzsignale und Referenzsignale nach der Erfindung. Analog zu Fig. 2 steuert ein Mikrocontroller 50 einen Oszillator 40 in Form eines UHF-Transceivers digital über n-Leitungen. Der Oszillator 40 liefert einen unmodulierten oder modulierten UHF-Träger, der über eine Serie Phasenschieber 32, 31 und 30 und ein optionales Bandpassfilter 20 an eine Antenne 10 gelangt und ein Lesefeld für passive RFID-Transponder erzeugt.

Das von einem RFID-Transponder rückgesendete Signal wird über dieselbe Antenne 10 empfangen und gelangt über das optionale Bandpassfilter 20 direkt oder über ein oder mehrere Phasenschieber 30, 31, 32 zu Hüllkurvendetektoren 60, 62, 64 und 66. jeder Phasenschieber 30, 31, 32 bewirkt eine Phasendrehung um 45°. Während die Empfangssignale in die eine Richtung gedreht werden, wird der Träger, der die einzelnen Phasenschieber umgekehrter Richtung durchläuft, in die entgegengesetzte Richtung gedreht.

Im Unterschied zu einer Ausführung nach Fig. 2 werden die Nutzsignale und die Referenzsignale nach der additiven Mischung der Empfangssignale mit dem Träger nicht von jeweils gemeinsamen Hüllkurvendetektoren demoduliert und durch Tiefpassfilter unterschiedlicher Grenzfrequenz gewonnen, sondern für jedes Nutzsignal und jedes Referenzsignal ist ein gesonderter Hüllkurvendetektor 60, 62, 64 und 66 vorhanden. Zwischen den Eingängen der Hüllkurvendetektoren 60 und 62 für den ersten Kanal und den Eingängen der Hüllkurvendetektoren 64 und 66 für den zweiten Kanal sind jeweils zwei in Serie geschaltete Phasenschieber 30 und 31 bzw. 31 und 32 vorhanden. Die entsprechenden Eingänge des zweiten Kanals sind gegenüber den Eingängen des ersten Kanals um jeweils einen Phasenschieber 30 bzw. 32 versetzt. Zwischen den Ausgängen der Hüllkurvendetektoren 60 und 62 und einem Komparator 90 sowie zwischen den Ausgängen der Hüllkurvendetektoren 64 und 66 und einem Komparator 92 sind jeweils Bandpassfilter 74 angeordnet. Die Bandpassfilter 74 weisen symmetrische, also nicht auf Masse bezogene Eingänge auf, sodass die Ausgänge jeweils zweier Hüllkurvendetektoren 60 und 62; 64 und 66 angeschlossen werden können. Die Bandpassfilter 74 dienen zur Dämpfung der vom Transceiver erzeugten Trägerfrequenz und Selektion des Empfangsbandes. Die Referenzsignale und Nutzsignale sind untereinander durch die Phasen zweier aufeinanderfolgender Phasenschieber verschieden.

Analog zu der Ausführung nach Fig. 2 gelangt das demodulierte Empfangssignal des ersten Kanals zu Eingängen eines Komparators 90 und das demodulierte Empfangssignal des zweiten Kanals zu Eingängen eines Komparators 92. Der Komparator 90 gewinnt aus dem analogen Nutzsignal durch Vergleich mit dem Referenzsignal ein digitales Signal, das dem Mikrocontroller 50 über einen I-Eingang zugeführt wird und der Komparator 92 gewinnt aus dem analogen Nutzsignal durch Vergleich mit dem Referenzsignal ein digitales Signal, das dem Mikrocontroller 50 über einen Q-Eingang nahe zugeführt wird. Beide Signale werden von diesem ausgewertet.

Auslöschungen, die durch unterschiedliche Phasen in der Überlagerung entstehen, treten nie gleichzeitig an beiden Eingängen auf, so dass mittels des Mikrocontrollers 50 stets zumindest eines der beiden Signale an den Eingängen ausgewertet werden kann. Durch die getrennte Gewinnung des Nutzsignals und des Referenzsignals kann die Modulation und Auswertung präziser erfolgen und so die Lesereichweite gegenüber der Ausführung nach Fig. 2 weiter verbessert werden.

Die Figuren 4 und 5 zeigen Zeigerdiagramme einer Überlagerung von zurückgesandten Transpondersignalen und einem Träger und zwar Fig. 4 eine konstruktive Überlagerung und Fig. 5 eine destruktive Überlagerung.

In Fig. 4 stellt 100 den vom Lesegerät ausgesandten Träger dar. Der über die Antenne ausgesandte Träger wird vom Transponder zum Teil reflektiert. Je nach Zustand 0 oder 1 hat die Reflektion eine transponderspezifische Amplitude und Phase. Die reflektierten Transpondersignale werden durch die vom Abstand abhängige Laufzeit in unterschiedlichen Phasenlagen dem Träger überlagert. Ein Beispiel für eine konstruktive Überlagerung ist in Fig. 4 dargestellt. Zum Träger 100 wird für den Zustand 0 das Transpondersignal 110 hinzugefügt für den Zustand 1 das Transpondersignal 111. Diese ergeben jeweils die Summensignale 120 und 121, von denen mit Hilfe des Hüllkurvendetektors die Amplitude ausgewertet wird. Hier ist ein gut detektierbarer Amplitudenunterschied zu erkennen.

In Fig. 5 hingegen sind die Transpondersignale 115 und 116 für die Zustände 0 und 1 um 90° gedreht. Die sich hier ergebenden Summensignale 125 und 126 haben die gleiche Amplitude. Der Zustand des Transponders kann hier raus nicht ermittelt werden.

## Patentansprüche

1. UHF-Lesegerät bestehend aus einem Sender (40; 42), einem Empfänger und einem digitalen De- und Encoder (50), wobei der Sender (40; 42) ein vom digitalen De- und Encoder gesteuerter und optional modulierbarer UHF-Generator ist und der Empfänger wenigstens einen Hüllkurvendetektor (60) umfasst,
wobei dem Eingang des Hüllkurvendetektors (60) additiv überlagert ein unmodulierter Träger des UHF-Generators (40; 42) und ein über eine Antenne (10) empfangenes moduliertes Transpondersignal zugeführt ist,
**dadurch gekennzeichnet, dass** der Ausgang des Hüllkurvendetektors (60) über einen Komparator (80) mit dem digitalen De- und Encoder (50) verbunden ist, dass das Ausgangssignal des Komparators (80) dem digitalen De- und Encoder zur Dekodierung (50) zugeführt ist, dass zwischen dem Ausgang des Hüllkurvendetektors (60) und den Eingängen des Komparators (80) Filter angeordnet sind, wobei ein Tiefpass- und Gleichanteilfilter (70) mit einem Referenzeingang des Komparators (80) und ein weiteres Tiefpassfilter (71) mit einem Signaleingang des Komparators (80) verbunden ist, wobei das mit dem Signaleingang verbundene Tiefpassfilter (71) eine höhere Grenzfrequenz aufweist als das mit dem Referenzeingang des Komparators (80) verbundene Tiefpass- und Gleichanteilfilter (70).

2. UHF-Lesegerät nach Anspruch 1, **dadurch gekennzeichnet, dass** vor dem Hüllkurvendetektor (60) und nach dem Sender (42) ein Phasenschieber (30) angeordnet ist.

3. UHF-Lesegerät nach Anspruch 1 oder 2, **dadurch gekennzeichnet, dass** zwischen dem Ausgang des digitalen De- und Encoders (50) und dem Modulationseingang des Senders (42) ein weiteres Tiefpassfilter (44) angeordnet ist.

4. UHF-Lesegerät nach Anspruch 2 oder 3, **dadurch gekennzeichnet, dass** der Empfänger einen zweiten Empfangskanal umfasst, der identisch zum ersten Empfangskanal aufgebaut ist, wobei der Eingang des einen Empfangskanals vor dem Phasenschieber (30) und der Eingang des anderen Empfangskanals hinter dem Phasenschieber (30) angeschlossen sind und dem digitalen De- und Encoder komplexe Ausgangssignale I und Q der Komparators von den beiden Empfangskanälen zugeführt ist.

5. UHF-Lesegerät nach einem der Ansprüche 1 bis 4, **dadurch gekennzeichnet, dass** zwischen der Antenne (10) und dem Eingang des Empfängers bzw. dem Ausgang des Senders (40) ein Bandpassfilter (20) angeordnet ist.

6. UHF-Lesegerät bestehend aus einem Sender (40; 42), einem Empfänger und einem digitalen De- und Encoder (50), wobei der Sender (40; 42) ein vom digitalen De- und Encoder gesteuerter und optional modulierbarer UHF-Generator ist und der Empfänger wenigstens einen Hüllkurvendetektor (60) umfasst,
wobei dem Eingang des Hüllkurvendetektors (60) additiv überlagert ein unmodulierter Träger des UHF-Generators (40; 42) und ein über eine Antenne (10) empfangenes moduliertes Transpondersignal zugeführt ist,
**dadurch gekennzeichnet, dass** der Ausgang des Hüllkurvendetektors (60) über einen Komparator (80) mit dem digitalen De- und Encoder (50) verbunden ist, dass das Ausgangssignal des Komparators (80) dem digitalen De- und Encoder zur Dekodierung (50) zugeführt ist, dass sowohl dem Signaleingang als auch dem Referenzeingang des Komparators oder jedes Komparators (90, 92) Hüllkurvendetektoren (60, 62; 64, 66) zugeordnet sind, dass in Serie zu einem Phasenschieber (30) weitere Phasenschieber (31, 32) angeordnet sind, dass die Eingänge der Hüllkurvendetektoren an Ein- oder Ausgängen der Phasenschieber (30, 31, 32) derart angeordnet sind, dass zwischen den Eingängen der Hüllkurvendetektoren (60, 62; 64, 66), die dem selben Komparators (90; 92) zugeordnet sind, jeweils eine Phasendifferenz verursacht durch zwei Phasenschieber auftritt und zwischen den Eingängen unterschiedlicher Komparatoren (90; 92) jeweils eine Phasendifferenz verursacht durch einen Phasenschieber auftritt und dass zwischen den Ausgängen der Hüllkurvendetektoren (60, 62; 64, 66) und den Eingängen des Komparators oder jedes Komparators (90; 92) wenigstens ein Tiefpassfilter oder Bandpassfilter (74) angeordnet sind.

## Claims

1. UHF reader consisting of a transmitter (40; 42), a receiver and a digital de- and encoder (50), the transmitter (40; 42) being an optionally modulable UHF generator controlled by the digital de- and encoder and the receiver comprising at least one envelope detector (60), wherein the input of the envelope detector (60) is supplied with an unmodulated carrier of the UHF generator (40; 42) and with a modulated transponder signal received via an antenna (10), which are additively overlaid,
**characterized in that** the output of the envelope detector (60) is connected to the digital de- and encoder (50) via a comparator (80), **in that** the output signal of the comparator (80) is supplied to the digital de- and encoder (50) for decoding, **in that** filters are arranged between the output of the envelope detector (60) and the inputs of the comparator (80), wherein a low-pass and direct-component filter (70) is connected to a reference input of the comparator (80) and a further low-pass filter (71) is connected to a signal input of the comparator (80), the low-pass filter (71) connected to the signal input having a higher cut-off frequency than the low-pass and direct-component filter (70) connected to the reference input of the comparator (80).

2. UHF reader according to Claim 1, **characterized in that** a phase shifter (30) is arranged upstream of the envelope detector (60) and downstream of the transmitter (42).

3. UHF reader according to Claim 1 or 2, **characterized in that** a further low-pass filter (44) is arranged between the output of the digital de- and encoder (50) and the modulation input of the transmitter (42).

4. UHF reader according to Claim 2 or 3, **characterized in that** the receiver comprises a second reception channel, which is of identical design to the first reception channel, wherein the input of one reception channel is connected upstream of the phase shifter (30) and the input of the other reception channel is connected downstream of the phase shifter (30) and the digital de- and encoder is supplied with complex output signals I and Q of the comparators of the two reception channels.

5. UHF reader according to one of Claims 1 to 4, **characterized in that** a bandpass filter (20) is arranged between the antenna (10) and the input of the receiver, or the output of the transmitter (40).

6. UHF reader consisting of a transmitter (40; 42), a receiver and a digital de- and encoder (50), the transmitter (40; 42) being an optionally modulable UHF generator controlled by the digital de- and encoder and the receiver comprising at least one envelope detector (60), wherein the input of the envelope detector (60) is supplied with an unmodulated carrier of the UHF generator (40; 42) and with a modulated transponder signal received via an antenna (10), which are additively overlaid,
**characterized**
**in that** the output of the envelope detector (60) is connected to the digital de- and encoder (50) via a comparator (80), in that the output signal of the comparator (80) is supplied to the digital de- and encoder (50) for decoding, in that both the signal input and the reference input of the comparator or of each comparator (90, 92) have associated envelope detectors (60, 62; 64, 66), in that a phase shifter (30) has further phase shifters (31, 32) arranged in series with it, in that the inputs of the envelope detectors are arranged at inputs or outputs of the phase shifters (30, 31, 32) in such a way that a respective phase difference caused by two phase shifters occurs between the inputs of the envelope detectors (60, 62; 64, 66) that are associated with the same comparator (90; 92) and a respective phase difference caused by one phase shifter occurs between the inputs of different comparators (90; 92), and in that at least one low-pass filter or bandpass filter (74) is arranged between the outputs of the envelope detectors (60, 62; 64, 66) and the inputs of the comparator or of each comparator (90; 92).

## Revendications

1. Lecteur UHF composé d'un émetteur (40 ; 42), d'un récepteur et d'un décodeur et codeur numérique (50), l'émetteur (40 ; 42) étant un générateur UHF commandé par le décodeur et codeur numérique et étant en option modulable, et le récepteur comprenant au moins un détecteur d'enveloppe (60), une porteuse non modulée du générateur UHF (40 ; 42) et un signal de transpondeur modulé, reçu par une antenne (10), étant acheminés à l'entrée du détecteur d'enveloppe (60) en superposition additive,
**caractérisé en ce que** la sortie du détecteur d'enveloppe (60) est reliée au décodeur et codeur numérique (50) par un comparateur (80), **en ce que** le signal de sortie du comparateur (80) est acheminé au décodeur et codeur numérique pour le décodage (50), **en ce que** des filtres sont disposés entre la sortie du détecteur d'enveloppe (60) et les entrées du comparateur (80), un filtre passe-bas et de composante continue (70) étant relié à une entrée de référence du comparateur (80), et un autre filtre passe-bas (71) étant relié à une entrée de signal du comparateur (80), le filtre passe-bas (71) relié à l'entrée de signal présentant une plus haute fréquence limite que le filtre passe-bas et de composante continue (70) relié à l'entrée de référence du comparateur (80).

2. Lecteur UHF selon la revendication 1, **caractérisé en ce qu'**un déphaseur (30) est disposé avant le détecteur d'enveloppe (60) et après l'émetteur (42).

3. Lecteur UHF selon la revendication 1 ou 2, **caractérisé en ce qu'**un autre filtre passe-bas (44) est disposé entre la sortie du décodeur et codeur numérique (50) et l'entrée de modulation de l'émetteur (42).

4. Lecteur UHF selon la revendication 2 ou 3, **caractérisé en ce que** le récepteur comprend un deuxième canal de réception qui est de conception identique au premier canal de réception, l'entrée dudit un canal de réception étant connectée avant le déphaseur (30) et l'entrée de l'autre canal de réception étant connectée après le déphaseur (30), et des signaux de sortie complexes I et Q du comparateur sont acheminés au décodeur et codeur numérique par les deux canaux de réception.

5. Lecteur UHF selon l'une quelconque des revendications 1 à 4, **caractérisé en ce qu'**un filtre passe-bande (20) est disposé entre l'antenne (10) et l'entrée du récepteur ou la sortie de l'émetteur (40).

6. Lecteur UHF, composé d'un émetteur (40 ; 42), d'un récepteur et d'un décodeur et codeur numérique (50), l'émetteur (40 ; 42) étant un générateur UHF commandé par le décodeur et codeur numérique et étant en option modulable, et le récepteur comprenant au moins un détecteur d'enveloppe (60), une porteuse non modulée du générateur UHF (40 ; 42) et un signal de transpondeur modulé, reçu par une antenne (10), étant acheminés à l'entrée du détecteur d'enveloppe (60) en superposition additive,
**caractérisé en ce que** la sortie du détecteur d'enveloppe (60) est reliée au décodeur et codeur numérique (50) par un comparateur (80), **en ce que** le signal de sortie du comparateur (80) est acheminé au décodeur et codeur numérique pour le décodage (50), **en ce que** des détecteurs d'enveloppe (60, 62; 64, 66) sont associés à la fois à l'entrée de signal et à l'entrée de référence du comparateur ou de chaque comparateur (90, 92), **en ce que** d'autres déphaseurs (31, 32) sont disposés en série avec un déphaseur (30), **en ce que** les entrées des détecteurs d'enveloppe sont disposés sur des entrées ou sorties des déphaseurs (30, 31, 32) de telle sorte qu'entre les entrées des détecteurs d'enveloppe (60, 62 ; 64, 66) qui sont associées au même comparateur (90 ; 92), respectivement une différence de phase provoquée par deux déphaseurs apparaît, et entre les entrées de différents comparateurs (90; 92), respectivement une différence de phase provoquée par un déphaseur apparaît, et **en ce qu'**au moins un filtre passe-bas ou filtre passe-bande (74) est disposé entre les sorties des détecteurs d'enveloppe (60, 62; 64, 66) et les entrées du comparateur ou de chaque comparateur (90 ; 92).
